# EUROPEAN PATENT SPECIFICATION

(11) **EP 1 737 735 B1**
(45) Date of publication and mention of the grant of the patent: **20.08.2008**
(21) Application number: 05732617.5
(22) Date of filing: 01.04.2005
(51) Int. Cl.: B65D 3/22, B65D 85/672, B31C 3/00

(54) **IDENTIFICATION DEVICE FOR MULTILAYER TUBULAR STRUCTURES**
KENNZEICHNUNGSVORRICHTUNG FÜR MEHRLAGIGE ROHRFÖRMIGE STRUKTUREN
DISPOSITIF D'IDENTIFICATION POUR STRUCTURES TUBULAIRES MULTICOUCHES

(30) Priority: 05.04.2004 US 818379
(43) Date of publication of application: 03.01.2007
(73) Proprietor: Sonoco Development, Inc., Hartsville, South Carolina 29550 (US)
(72) Inventor: BELLUM, Cliff, Hartsville, SC 29550 (US); LOWRY, James, Franklin, TN 37069 (US)
(74) Representative: Moreland, David
(86) International application number: PCT/US2005/011339
(87) International publication number: WO 2005/097604

(56) References cited:
- EP-A- 1 236 650
- EP-A- 1 369 353
- DE-U1- 20 305 299
- US-B1- 6 334 587
- US-B1- 6 481 631

## Description

### BACKGROUND OF THE INVENTION

The present invention relates to "smart packaging" systems and methods, and more particularly to electronic detection devices, such as radio frequency identification devices ("RFID" tags or devices hereinafter) and methods of using these devices in packaging and package tracking systems.

Monitoring the location and status of items is advantageous in many applications. For example, in manufacturing environments it is important to know the whereabouts of items in a factory, and in transportation environments it is important to identify and document the coming and going of items from a warehouse or the like. Bar codes have traditionally been used to identify and track items. In particular, 1D bar codes are most common and are used to identify items at the grocery store, etc. More recently, 2D bar codes have been developed and provide substantially more information than 1D bar codes. Thus, 2D bar codes are used with shipping labels and other items where more information is typically needed to identify the item(s) associated with the bar code. However, 1D and 2D bar code systems are often not compatible with one another, and the bar code must be clearly visible and readable by a scanner or the like in order to transfer the information associated with the bar code.

Another method for tracking an item and/or transferring information about an item is through a magnetic strip having pre-programmed coded information that is attached to an outer surface of an item. The information is read by passing the magnetic strip through a high-resolution magnetic reader to produce an electric field. While this technology does not require a clear line-of-sight between the reader and the strip for proper reading of the information, the distance at which the strip can be read is limited, and the system is limited to read-only. The magnetic strips are also prone to damage, which can be a problem for longer magnetic strips that contain more data.

Another way to track items is through the use of RFID. RFID has been used for some time in a variety of applications, from tracking garments to pallets to trucks. RFID works on an inductive principle. In a passive RFID system, a reader generates a magnetic field at a predetermined frequency. When a RFID tag, which can be usually categorized as being read-only or read/write, enters the magnetic field, a small electric current forms in the tag's resonant circuit, which includes a coiled antenna and a capacitor. This circuit provides power to the RFID tag, which then modulates the magnetic field in order to transmit information that is pre-programmed on the tag back to the reader at a predetermined frequency, such as 125kHz (low frequency) or 13.56MHz (high frequency). The reader then receives, demodulates, and decodes the signal transmission, and then sends the data onto a host computer associated with the system for further processing.

An active RFID system operates in much the same way, but in an active system the RFID tag includes its own battery, allowing the tag to transmit data and information at the touch of a button. For example, a remote control garage door opener typically uses an active RFID tag that transmits a predetermined code to the receiver in order to raise and lower the garage door at the user's discretion.

Another technology that is related to RFID tags is known as Bistatix, which operates much the same way as RFID tags except that the coiled antenna and capacitor of the RFID tags have been replaced by a printed, carbon-based material. As a result, a Bistatix tag is extremely flat and relatively flexible, although currently these types of devices are limited to a frequency range of about 125KHz. In addition, the read range of a Bistatix tag is dependent on size, so for long read ranges a very large tag may be required. Regardless, whether a Bistatix, active, or passive RFID tag is used in a particular tracking system, these tags and systems have greatly advanced package tracking and data management.

One of the challenges that exist with electronic detection devices, and with RFID systems in particular, is how to apply a RFID tag to an item. Currently tags are glued to an outer surface of a container or pallet, and while this method is satisfactory for many applications, the prominent location of the tag often leaves the tag exposed and subject to damage or inadvertent removal during processing. .

DE 203 05 299 U1 discloses a method of wrapping a transponder into a tubular packaging structure. Other types of tag applications include sewing tags into a garment and clipping tags to an item with metal fasteners. The difficulties in applying a detection device is particularly pronounced when applying such devices or tags to tubular rolls or containers, such as those used in supporting roll goods or for packaging food products, as these types of structures often rub against one another during production and thereby cause damage to the tags. In addition, reusable carriers or containers are often used for many cycles, such as in doffing and creeling textile yarn, which can further accelerate damage to the RFID tag. Thus, there is a need to manufacture a container or carrier having an electronic detection device that will not be damaged or destroyed during processing

### BRIEF SUMMARY OF THE INVENTION

These and other needs are provided by the multilayer tubular structure and methods of forming the multilayer tubular structure according to the appended claims. The multilayer tubular structure of the present invention includes a tubular body having an electronic detection device, such as a radio frequency identification device or tag, which is embedded therein. As such, the detection device of the present invention cannot be damaged or broken during processing or use of the multilayer tubular structure. Because the device is hidden inside the multilayer tubular body, the device is less likely to be seen and possibly removed, which is useful from a security standpoint.

More particularly, a multilayer tubular structure according to the present invention comprises a tubular body formed from multiple plies or layers of flexible material, such as paperboard, wrapped one upon another about an axis of the tubular body and adhered together in a radially layered construction. Such tubular bodies are used as containers for packaging products, such as cookies and potato crisps, and as winding cores for supporting products wound around the outer surface of the tube, such as textiles, paper goods, and the like. The term "multilayer tubular structure" is used herein to denote both containers and winding cores, noting that the advantageous features of the present invention may exist in each type of tubular body.

The multilayer tubular structure also includes an electronic detection device such as a radio frequency identification (RFID) device that is interposed between two of the multiple layers of the tubular body. The identification device is capable of storing and transmitting data associated with the multilayer tubular structure, the products stored in or on the multilayer tubular structure, or both. In addition, other data can be stored, transmitted to and from, and deleted from the identification device.

The identification device can have many shapes and configurations, but according to one embodiment the device is relatively thin and flat, and includes a coiled antenna and a capacitor that respond to magnetic fields, such as presented by radio frequency transmitters. The identification device is spaced a predetermined distance from the opposed ends of the tubular body, and in one embodiment is laminated to at least one of the multiple layers of the tubular body.

In another embodiment, at least one of the multiple layers of the tubular body defines an opening sized to fit the identification device such that the identification device can substantially occupy the opening of the layer.

In either case, the identification device cannot be readily removed from the multilayer tubular structure because it is formed as part of the tubular body. However, information regarding the multilayer tubular structure, the products, or any other information can be deleted, overwritten, substituted, and/or transferred from the identification device.

Methods of manufacturing and using multilayer tubular structures also form part of the present invention. According to one method, a multilayer tubular structure for storing products is manufactured by wrapping multiple layers of flexible material about a mandrel into a tubular body, and embedding an identification device in the tubular body during the wrapping step such that the identification device is interposed between two of the multiple layers of the tubular body. According to one method, the identification device is laminated to at least one of the multiple layers, and an opening is formed in at least one of the layers such that the identification device substantially occupies the opening during the wrapping step. The opening defined by the layer or layers accommodates the thickness of the identification device so that the identification device does not create a bulge or raised section in the tubular body.

The multilayer tubular structure of the present invention has many uses. Because the identification device is embedded in the tubular body, the device is safe from damage or breakage from being hit or bumped during processing, and cannot be easily lost, removed, or stolen. The multilayer tubular structure is particularly useful for tracking products that are stored on or therein, such as cookies, potato crisps, roll goods, and the like. The methods of the present invention do not require special construction techniques, end caps, or special grooves cut into portions of the tubular structure, which increase manufacturing efficiency and reduce cost.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 is a side perspective view of a multilayer tubular structure according to one embodiment of the present invention;
Figure 2 is an end elevation view of the multilayer tubular structure shown in Figure 1;
Figure 3A is a perspective view of a multilayer tubular structure having roll goods wound thereupon according to one embodiment of the present invention;
Figure 3B is a perspective view of a multilayer tubular structure having products disposed therein according to one embodiment of the present invention;
Figure 4 is a top elevation view of an identification device according to one embodiment of the present invention;
Figure 5A is a perspective view of a multilayer tubular structure having a localized matrix of particles embedded therein;
Figure 5B is a perspective view of a multilayer tubular structure having a substantially dispersed matrix of particles embedded therein; and
Figure 6 is a plan view illustrating a method for making a multilayer tubular structure according to one embodiment of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

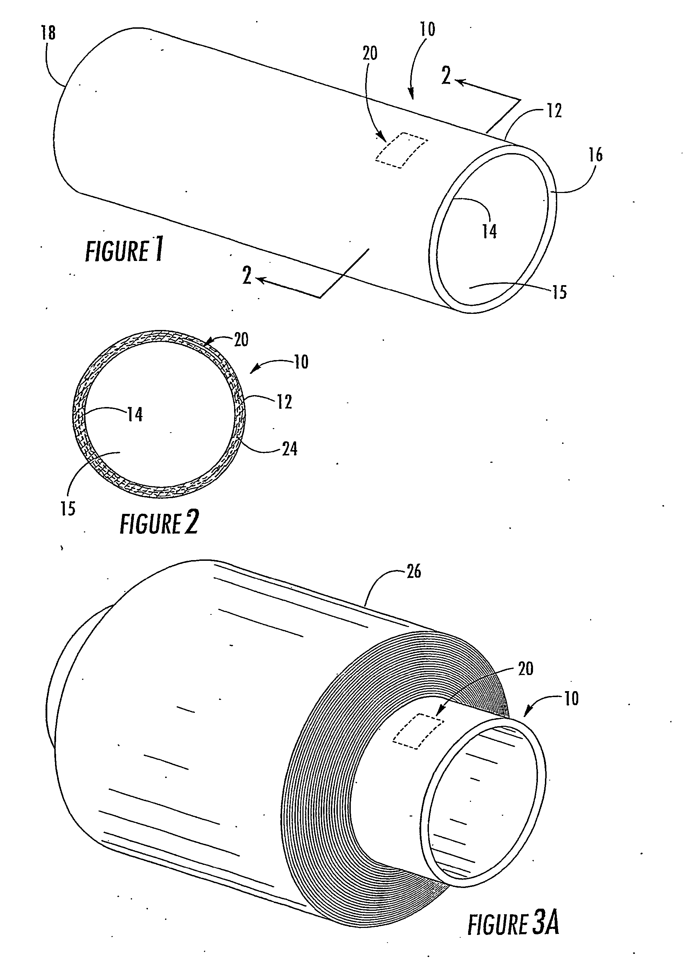

Turning to the figures, Figures 1 and 2 illustrate a multilayer tubular structure according to the present invention. In particular, reference number 10 refers to a multilayer tubular structure used for packaging products and the like, or to a winding core or tube such as is used to support roll goods, such as textiles, paper, plastic, and other materials.

The multilayer tubular structure 10 includes multiple layers or plies of one or more known flexible materials that are strong and particularly advantageous for packaging products and supporting roll goods. In particular, the multilayer tubular structure 10 includes an outer layer 12 and an inner layer 14 that form a tubular shape defining a central opening 15 and opposed ends 16, 18. While not shown, other common layers of a multilayer tubular structure may also be present, such as a liner ply and/or a label ply. One or more end closures or overcaps (not shown) may also be present as dictated by the use of the multilayer tubular structure. The various plies or layers can comprise any number of materials, including but not limited to paperboard, plastic, metal foil, metallized plastic, or combinations thereof.

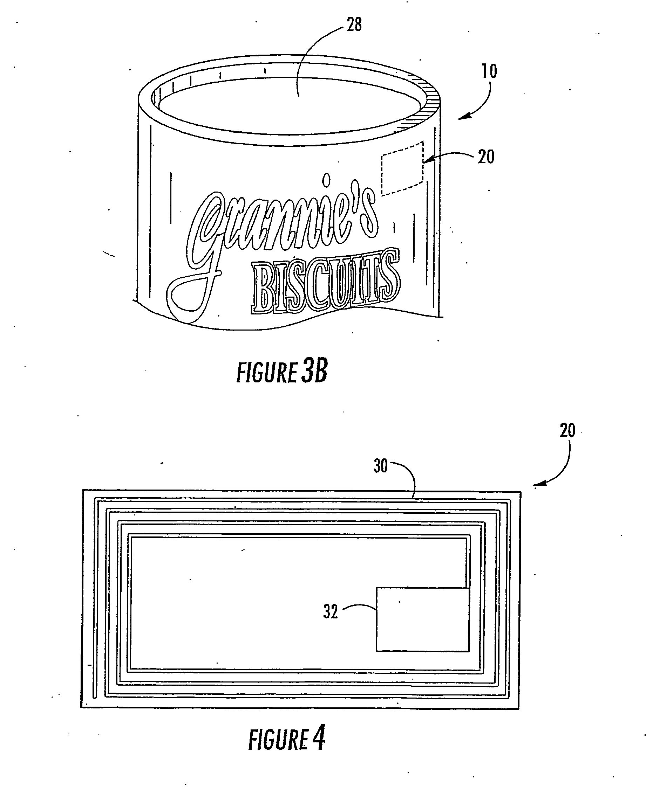

As shown in phantom lines in Figures 1 and 3 and in detail in Figure 4, the multilayer tubular structure 10 also includes an identification device 20. The identification device **20** can have different forms and be comprised of various materials, but according to one embodiment the identification device is responsive to radio frequencies and comprises a coiled antenna 30 and a capacitor or processor **32.** Such radio frequency identification ("RFID") devices or tags are known and are available from a variety of manufacturers, such as Motorola® and Texas Instruments®. The coiled antenna **30** is typically made from metal, although printed carbon-based materials, such as those described herein, may also be used.

As shown in Figure 2, the identification device 20 is positioned between the outer layer 12 and inner layer 14 of the tubular body 10. Many layers or plies may be present in the tubular body **10,** but the number of layers described herein is limited for simplicity. As described below, the identification device 20 is embedded into the tubular body during manufacture, which helps prevent damage to the device and helps keep the device hidden.

The device 20 is able to store information about the multilayer tubular structure 10, products associated with the multilayer tubular structure, and information regarding the processing or actions taken with respect thereto. For example, Figure 3A shows a tubular structure 10 having roll goods 26, such as plastic sheeting, being wound thereupon. Similarly, Figure 3B shows a tubular structure 10 having products 28 stored therein, such as cookies, biscuits, potato crisps, or non-food products. The device 20 is capable of storing a unique ID for the multilayer tubular structure 10, the goods 26, or processes performed on the tubular structure or goods, such as moving the structure and goods with a transporter or processing the goods in a downstream operation. Other information, such as product ID, technical data, quality control information, code dating, location, and order status may be imported, stored, and transmitted by the device **20.** Information can also be deleted, which includes overwriting, erasing, substituting, and disabling, so that the tubular structure 10 can be re-used for additional products or goods. These types of features allow for improved inventory management, inventory control, in-house product location, and supply chain management.

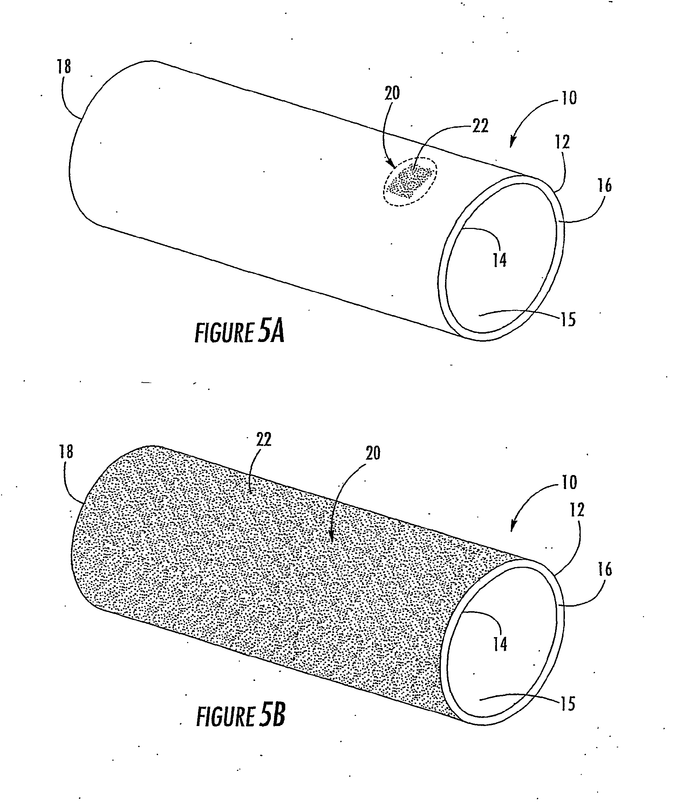

Figures 5A and 5B represent an embodiment which does not form part of the present invention, whereby the device 20 is in the form of a matrix of distinct metallic flakes or particles 22, such as ferrous slivers, that are embedded within a least a portion of the tubular structure. The particles 22 forming the device 20 in this embodiment respond in the same manner as the devices described above, such that information can be stored and transmitted about the multilayer tubular structure, the products, or processes performed thereon. Preferably, the particles 22 are mixed or integrally bonded with the fibers, such as paper fibers, forming at least one of the layers of the tubular body, and may be either concentrated in a particular or discrete location of the tubular body, or may be dispersed substantially throughout the tubular body as described below.

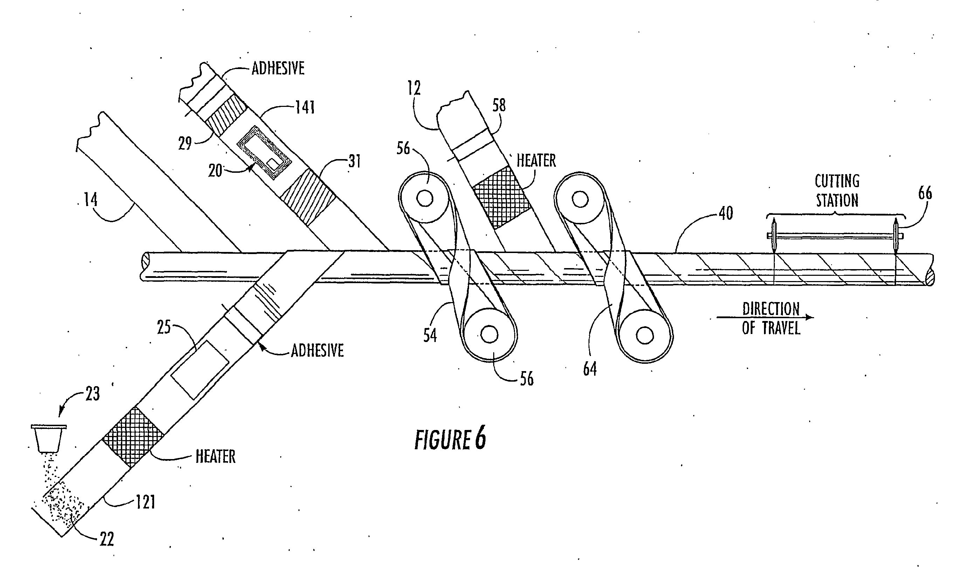

Figure 6 illustrates a method for making a composite multilayer tubular structure according to the present invention. A continuous strip of flexible body ply material 121 is first advanced toward a shaping mandrel 40. The body ply material 121 in Figure 6 is an internal layer disposed between the outer layer 12 and the inner layer 14. More internal layers may be present; however, in one embodiment no internal layers are present, leaving only the inner and outer layers to comprise the tubular body. In one alternative embodiment also shown in Figure 6, body ply material 121 may be presented with a plurality of metallic particles 22 dispersed at predetermined intervals or continuously by a feeder 23. The body ply material 121 is preferably a loose form of wet paper fibers when the particles 22 are dispersed or applied thereto such that the particles and the paper fibers are integrally bonded to one another, although it is possible to apply the particles to only the surface of the relatively wet or dry body ply material 121. In one embodiment, the body ply material 121 defines an opening 25 that is sized to fit the identification device 20. The body ply material 121 may also pass under adhesive rollers and heaters depending on the application.

The inner layer 14 is also advanced toward the mandrel 40 as well a support layer 141, which according to one embodiment has an identification device **20** applied thereto by an applicator **29.** A heated nip **31** may also be present to laminate the identification device 20 to the support layer 141. Although not described in detail for clarity, various liner and barrier material configurations could be employed at this general stage of manufacture depending upon the products or goods used in conjunction with the multilayer tubular structure 10.

The inner layer 14, body ply material 121, and support layer 141 are advanced toward the mandrel 40 and helically wrapped around the mandrel one atop another to form a multilayer tubular structure. In one embodiment, the opening 25 defined by the body ply material 121 is advanced around the mandrel 40 so that the identification device 20 substantially occupies the opening. Advantageously, the thickness of the identification device 20 is accommodated by the opening 25 and the thickness of the body ply material 121 such that the finished multilayer tubular structure 10, and particularly the inner and outer layers 14,12, do not show or indicate the presence of the identification device, such as with a rise, bump, or other visible sign.

The tubular structure is advanced down the mandrel 40 by a conventional winding belt 54 that extends around a pair of opposed pulleys 56. The winding belt 54 not only rotates and advances the tubular structure, but also applies pressure to the individual layers or plies to ensure a secure bond therebetween.

Downstream of the winding belt 54, a continuous outer layer 12 is advanced toward the mandrel 40 through an adhesive applicator 58 that applies an adhesive to the inner surface of the outer layer. The outer layer 12 and the adhesive applied thereto are then passed underneath a heater to render the adhesive substantially tacky.

After passing underneath the heater, the outer layer **12** is then wrapped around the mandrel 40 onto the advancing tubular structure. It should be noted that as each ply or layer is wound about the mandrel 40, a trailing edge of the ply is brought into contact with a leading edge of the ensuing portion of the ply, the edges becoming abutted together to form a butt joint therebetween. It should also be noted that while spiral or helical winding is discussed herein, the multilayer tubular structures 10 of the present invention could be formed by convolute winding or the like.

The wrapped layers or plies are then advanced down the mandrel 40 by a winding belt 64. The winding belt 64 rotates and advances the wrapped layers and applies pressure to the overlapping edges of the layers to ensure a secure bond between the respective edges. After the multiple layers have been secured together on the mandrel to form a continuous tubular structure, the tubular structure is scored or cut by a cutting station 66. The cutting is preferably performed at regular intervals such that the identification device (if applicable) is near one of the resulting ends 16,18, but spaced inwardly therefrom. After the tubular structure 10 is cut, it is removed from the mandrel 40.

Accordingly, the multilayer tubular structure and method of the present invention overcome limitations and deficiencies presented by conventional containers and cores and methods of manufacturing such containers and cores. In particular, the multilayer tubular structure and methods for manufacturing same of the present invention provide a multilayer tubular structure that includes an identification device that is less susceptible to damage or theft, and the structure can be formed by incorporating conventional manufacturing techniques and systems. The multilayer tubular structure and methods of the present invention will therefore not only result in decreased production costs, but will reduce inefficiencies in supply chain management, inventory management, inventory control, and in-house product location.

Many modifications and other embodiments of the inventions set forth herein will come to mind to one skilled in the art to which these inventions pertain. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A multilayer tubular structure (10) for storing products (26, 28), comprising a tubular body formed from multiple layers (14, 121, 141) of flexible material wrapped one upon another about an axis of the tubular body and adhered together, the tubular body having inner and outer surfaces and opposed ends (16, 18), and an electronic detection device (20) interposed between two of the multiple layers (14, 121, 141) of the tubular body, the electronic detection device (20) being spaced from the opposed ends (16, 18) of the tubular body,
**characterised in that** the multilayer tubular structure (10) includes:
a first ply (141) of flexible material having the electronic detection device (20) affixed to a surface of the first ply (141), the first ply (141) being wound about the axis;
a second ply (121) of flexible material having an opening (25) therethrough, the second ply (121) being wound about the axis and in contact with the surface of the first ply (141) and adhered thereto by an adhesive, with the electronic detection device (20) being positioned in the opening (25) in the second ply (121); and
a third ply (14) wound about the axis against the second ply (121) and adhered thereto by an adhesive to form said multilayered tubular structure, the third ply (14) being on an opposite side of the second ply (121) from the first ply (141), such that the third ply (14) covers the opening (25) in the second ply (121).

2. A multilayer tubular structure according to Claim 1, wherein the electronic detection device (20) is capable of storing and transmitting data associated with at least one of the tubular structure (10) and the products (26, 28).

3. A multilayer tubular structure according to Claim 1, wherein the electronic detection device (20) includes a coiled antenna (30) and a capacitor (32).

4. A multilayer tubular structure according to Claim 1, wherein the electronic detection device (20) includes a printed carbon-based antenna (30).

5. A multilayer tubular structure according to Claim 1, wherein a plurality of the multiple layers (14, 121, 141) are at least partially formed from paperboard.

6. A method of manufacturing a multilayer tubular structure (10) for storing products, the method comprising wrapping multiple layers (14, 121, 141) of flexible material about a mandrel (40) into a tubular body, the tubular body having inner and outer surfaces and opposed ends, and embedding an electronic detection device (20) having an antenna (30) and a capacitor (32) in the tubular body during the wrapping of the flexible material about the mandrel (40) such that the electronic detection device (20) is interposed between two of the multiple layers (14, 121, 141) of the flexible material and between the inner and outer surfaces of the tubular body, and spaced away from the opposed ends thereof,
**characterised in that** the method includes the steps of:
affixing the electronic detection device (20) to a surface of a first ply (141) of flexible material;
winding the first ply (141) having the electronic detection device (20) about the mandrel (40);
providing a second ply (121) of flexible material having an opening (25) therethrough, the opening (25) being sized to accommodate the electronic detection device (20);
winding the second ply (121) having the opening (25) about the mandrel (40) in contact with the surface of the first ply (141) in such a manner that the electronic detection device (20) is positioned in the opening (25) in the second ply (121), and adhering the first and second plies (141, 121) together; and
winding a third ply (14) about the axis against the second ply (121), on an opposite side of the second ply (121) from the first ply (141), such that the third ply (14) covers the opening (25) in the second ply (121), and adhering the second and third plies (121, 14) together to form the multilayered tubular structure (10).

7. A method according to Claim 6, further comprising storing information about at least one of the multilayer tubular structure (10) and the products (26, 28) in the electronic detection device (20).

8. A method according to Claim 6, further comprising identifying the information about at least one of the multilayer tubular structure (10) and the products (26, 28) stored in the electronic detection device (20) using a reading device.

9. A method according to Claim 6, further comprising the steps of:
wrapping a product (26) about the outer surface of the multilayer tubular structure (10);
storing information in the electronic detection device (20) about the product (26) wrapped about the multilayer tubular structure (10); and
identifying the stored information about the product (26) stored in the electronic detection device (20) using a reader.

10. A method according to Claim 9, further comprising:
deleting the stored information about the product (26), such that the electronic detection device (20) and tubular structure (10) can be re-used in conjunction with another product.

## Patentansprüche

1. Mehrlagige röhrenförmige Struktur (10) zum Aufbewahren von Produkten (26, 28), die einen röhrenförmigen Körper, der aus mehrfachen Schichten (14, 121, 141) aus einem flexiblen Material besteht, die um eine Achse des röhrenförmigen Körpers eine auf die andere gewickelt und aneinander geklebt sind, wobei der röhrenförmige Körper eine Innen- und eine Außenfläche und entgegengesetzte Enden (16, 18) hat, und eine elektronische Detektorvorrichtung (20), die zwischen zweien der mehrfachen Schichten (14, 121, 141) des röhrenförmigen Körpers eingeschoben ist, umfasst, wobei die elektronische Detektorvorrichtung (20) mit Zwischenraum von den entgegengesetzten Enden (16, 18) des röhrenförmigen Körpers angeordnet ist, **dadurch gekennzeichnet, dass** die mehrlagige röhrenförmige Struktur (10) Folgendes einschließt:
eine erste Lage (141) aus einem flexiblen Material, welche die elektronische Detektorvorrichtung (20) an einer Oberfläche der ersten Schicht (141) befestigt hat, wobei die erste Schicht (141) um die Achse gewunden ist,
eine zweite Schicht (121) aus einem flexiblen Material, die eine Öffnung (25) durch dieselbe hat, wobei die zweite Schicht (121) um die Achse gewunden und in Berührung mit der Oberfläche der ersten Schicht (141) und durch einen Klebstoff an dieselbe geklebt ist, wobei die elektronische Detektovorrichtung (20) in der Öffnung (25) in der zweiten Schicht (121) angeordnet ist, und
eine dritte Schicht (14), die an der zweiten Schicht (121) um die Achse gewunden und durch einen Klebstoff an dieselbe geklebt ist, um die mehrlagige röhrenförmige Struktur zu bilden, wobei sich die dritte Schicht (14) auf einer der ersten Schicht (141) entgegengesetzten Seite der zweiten Schicht (121) befindet derart, dass die dritte Schicht (14) die Öffnung (25) in der zweiten Schicht (121) abdeckt.

2. Mehrlagige röhrenförmige Struktur nach Anspruch 1, wobei die elektronische Detektorvorrichtung (20) dazu in der Lage ist, Daten zu speichern und weiterzuleiten, die mit wenigstens einer der Komponenten röhrenförmige Struktur (10) und Produkte (26, 28) verbunden sind.

3. Mehrlagige röhrenförmige Struktur nach Anspruch 1, wobei die elektronische Detektorvorrichtung (20) eine Wendelantenne (30) und einen Kondensator (32) einschließt.

4. Mehrlagige röhrenförmige Struktur nach Anspruch 1, wobei die elektronische Detektorvorrichtung (20) eine gedruckte Antenne (30) auf Kohlenstoffbasis einschließt.

5. Mehrlagige röhrenförmige Struktur nach Anspruch 1, wobei mehrere der mehrfachen Schichten (14, 121, 141) wenigstens teilweise aus Pappe geformt sind.

6. Verfahren zum Fertigen einer mehrlagigen röhrenförmigen Struktur (10) zum Aufbewahren von Produkten, wobei das Verfahren umfasst, mehrfache Schichten (14, 121, 141) aus einem flexiblen Material um einen Dorn (40) zu einem röhrenförmigen Körper zu wickeln, wobei der röhrenförmige Körper eine Innen- und eine Außenfläche und entgegengesetzte Enden hat, und eine elektronische Detektorvorrichtung (20), die eine Antenne (30) und einen Kondensator (32) hat, während des Wickelns des flexiblen Materials um den Dorn (40) in den röhrenförmigen Körper einzubetten derart, dass die elektronische Detektorvorrichtung (20) zwischen zweien der mehrfachen Schichten (14, 121, 141) aus dem flexiblen Material und zwischen der Innen- und der Außenfläche des röhrenförmigen Körpers eingeschoben und mit Zwischenraum von den entgegengesetzten Enden desselben angeordnet ist, **dadurch gekennzeichnet, dass** das Verfahren die folgenden Schritte einschließt:
Befestigen der elektronischen Detektorvorrichtung (20) an einer Oberfläche einer ersten Schicht (141) aus einem flexiblen Material,
Winden der ersten Schicht (141), welche die elektronische Detektorvorrichtung (20) hat, um den Dom(40),
Bereitstellen einer zweiten Schicht (121) aus einem flexiblen Material, die eine Öffnung (25) durch dieselbe hat, wobei die Öffnung (25) zum Aufnehmen der elektronischen Detektorvorrichtung (20) bemessen ist,
Winden der zweiten Schicht (121), welche die Öffnung (25) hat, um den Dorn (40) in Berührung mit der Oberfläche der ersten Schicht (141) derart, dass die elektronische Detektorvorrichtung (20) in der Öffnung (25) in der zweiten Schicht (121) angeordnet ist, und Kleben der ersten und der zweiten Schicht (141, 121) aneinander, und
Winden einer dritten Schicht (14) an der zweiten Schicht (121) um die Achse, auf einer der ersten Schicht (141) entgegengesetzten Seite der zweiten Schicht (121), derart, dass die dritte Schicht (14) die Öffnung (25) in der zweiten Schicht (121) abdeckt, und Kleben der zweiten und der dritten Schicht (121, 14) aneinander, um die mehrlagige röhrenförmige Struktur (10) zu bilden.

7. Verfahren nach Anspruch 6, das ferner umfasst, Informationen über wenigstens eine der Komponenten mehrlagige röhrenförmige Struktur (10) und Produkte (26, 28) in der elektronischen Detektorvorrichtung (20) zu speichern.

8. Verfahren nach Anspruch 6, das ferner umfasst, die in der elektronischen Detektorvorrichtung (20) gespeicherten Informationen über wenigstens eine der Komponenten mehrlagige röhrenförmige Struktur (10) und Produkte (26, 28) unter Verwendung einer Lesevorrichtung zu identifizieren.

9. Verfahren nach Anspruch 6, das ferner die folgenden Schritte umfasst:
Wickeln eines Produkts (26) um die Außenfläche der mehrlagigen röhrenförmigen Struktur (10),
Speichern von Informationen in der elektronischen Detektorvorrichtung (20) über das um die mehrlagige röhrenförmige Struktur (10) gewickelte Produkt (26), und
Identifizieren der gespeicherten Informationen über das Produkt (26), die in der elektronischen Detektorvorrichtung (20) gespeichert sind, unter Verwendung eines Lesegeräts.

10. Verfahren nach Anspruch 9, das ferner Folgendes umfasst:
Löschen der gespeicherten Informationen über das Produkt (26) derart, dass die elektronische Detektorvorrichtung (20) und die röhrenförmige Struktur (10) in Verbindung mit einem anderen Produkt wiederverwendet werden können.

## Revendications

1. Structure tubulaire multicouches (10) pour stocker des produits (26, 28), comprenant un corps tubulaire formé à partir de couches multiples (14, 121, 141) d'un matériau flexible enveloppées les unes au-dessus des autres autour d'un axe du corps tubulaire et assemblées par adhésion, le corps tubulaire comportant des surfaces interne et externe et des extrémités opposées (16, 18), et un dispositif de détection électronique (20) agencé entre deux couches des couches multiples (14, 121, 141) du corps tubulaire, le dispositif de détection électronique (20) étant espacé des extrémités opposées (16, 18) du corps tubulaire, **caractérisée en ce que** la structure tubulaire multicouches (10) englobe :
une première nappe (141) de matériau flexible, comportant le dispositif de détection électronique (20) fixé sur une surface de la première nappe (141), la première nappe (141) étant enroulée autour de l'axe ;
une deuxième nappe (121) de matériau flexible, comportant une ouverture (25) la traversant, la deuxième nappe (121) étant enroulée autour de l'axe, en contact avec la surface de la première nappe (141) et étant adhérée à celle-ci par un adhésif, le dispositif de détection électronique (20) étant positionné dans l'ouverture (25) dans deuxième nappe (121) ; et
une troisième nappe (14) enroulée autour de l'axe, contre la deuxième nappe (121), et adhérée à celle-ci par un adhésif pour former ladite structure tubulaire multicouches, la troisième nappe (14) étant agencée sur un côté de la deuxième nappe (121) opposé à la première nappe (141), de sorte que la troisième nappe (14) recouvre l'ouverture (25) dans la deuxième nappe (121).

2. Structure tubulaire multicouches selon la revendication 1, dans laquelle le dispositif de détection électronique (20) peut enregistrer et transmettre des données associées à au moins un élément, la structure tubulaire (10) ou les produits (26, 28).

3. Structure tubulaire multicouches selon la revendication 1. dans laquelle le dispositif de détection électronique (20) englobe une antenne en spirale (30) et un condensateur (32).

4. Structure tubulaire multicouches selon la revendication 1, dans laquelle le dispositif de détection électronique (20) englobe une antenne imprimée à base de carbone (30).

5. Structure tubulaire multicouches selon la revendication 1, dans laquelle plusieurs couches des couches multiples (14, 121, 141) sont formées au moins en partie à partir de carton.

6. Procédé de fabrication d'une structure tubulaire multicouches (10) pour stocker des produits, le procédé comprenant les étapes d'enveloppement de couches multiples (14, 121, 141) de matériau flexible autour d'un mandrin (40) dans un corps tubulaire, le corps tubulaire comportant des surfaces interne et externe et des extrémités opposées, et d'incorporation d'un dispositif de détection électronique (20) comportant une antenne (30) et un condensateur (32) dans le corps tubulaire au cours de l'enveloppement du matériau flexible autour du mandrin (40), de sorte que le dispositif de détection électronique (20) est agencé entre deux couches des couches multiples (14, 121, 141) de matériau flexible et entre les surfaces interne et externe du corps tubulaire, et espacé des extrémités opposées de celui-ci, **caractérisé en ce que** le procédé englobe les étapes ci-dessous :
fixation du dispositif de détection électronique (20) sur une surface d'une première nappe (141) de matériau flexible ;
enroulement de la première nappe (141) comportant le dispositif de détection électronique (20) autour du mandrin (40);
fourniture d'une deuxième nappe (121) de matériau flexible, comportant une ouverture (25) la traversant, l'ouverture (25) étant dimensionnée de sorte à recevoir le dispositif de détection électronique (20) ;
enroulement de la deuxième nappe (121) comportant l'ouverture (25) autour du mandrin (40), en contact avec la surface de la première nappe (141), de sorte que le dispositif de détection électronique (20) est positionné dans l'ouverture (25) dans la deuxième nappe (121), et assemblage par adhésion des première et deuxième nappes (141, 121) ; et
enroulement d'une troisième nappe (14) autour de l'axe, contre la deuxième nappe (121), sur un côté de la deuxième nappe (121) opposé à la première nappe (141), de sorte que la troisième nappe (14) recouvre l'ouverture (25) dans la deuxième nappe (121) et assemblage par adhésion des deuxième et troisième nappes (121, 14) pour former la structure tubulaire multicouches (10).

7. Procédé selon la revendication 6, comprenant en outre l'étape d'enregistrement d'informations concernant au moins un élément, la structure tubulaire multicouches (10) ou les produits (26, 28), dans le dispositif de détection électronique (20).

8. Procédé selon la revendication 6, comprenant en outre l'étape d'identification des informations concernant au moins un élément, la structure tubulaire multicouches (10) et les produits (26, 28), enregistrées dans le dispositif de détection électronique (20), par l'intermédiaire d'un dispositif de lecture.

9. Procédé selon la revendication 6, comprenant en outre les étapes ci-dessous :
enveloppement d'un produit (26) autour de la surface externe de la structure tubulaire multicouches (10);
enregistrement d'informations dans le dispositif de détection électronique (20), concernant le produit (26) enveloppé autour de la structure tubulaire multicouches (10); et
identification des informations enregistrées concernant le produit (26), enregistrées dans le dispositif de détection électronique (20), par l'intermédiaire d'un lecteur.

10. Procédé selon la revendication 9, comprenant en outre l'étape ci-dessous :
effacement des informations enregistrées concernant le produit (26), de sorte que le dispositif de détection électronique (20) et la structure tubulaire (10) peuvent être réutilisés avec un autre produit.
